Europäisches Patentamt

European Patent Office

Office européen des brevets

(19)

(11) Publication number: **0 129 518**
**A1**

(12) **EUROPEAN PATENT APPLICATION**

(21) Application number: **84830159.4**

(22) Date of filing: **21.05.84**

(51) Int. Cl.³: **B 08 B 3/06**

(30) Priority: **15.06.83 IT 4005883**

(43) Date of publication of application:
**27.12.84 Bulletin 84/52**

(84) Designated Contracting States:
**BE DE FR GB IT NL**

(71) Applicant: **WASHPLAST di FACCHINI Ado**
**Via Davanti, 26**
**Gavello (Modena)(IT)**

(72) Inventor: **Ado, Facchini**
**Via Davanti, 26**
**Gavello (Modena)(IT)**

(74) Representative: **Bonfreschi, Mario**
**Bugnion S.p.A. Viale Trento Trieste, 25**
**I-41100 Modena(IT)**

(54) Machine and process for washing and drying sheet plastic material, intended for use in the recycling of plastics.

(57) The machine comprises a hollow drum (9) having a perforated cylindrical surface (10) into which sheet plastic material is fed for washing and drying. Inside the drum, and parallel to its axis, one has a shaft (18) provided with a number of paddles (19) and projecting beaters (20) set at regular intervals along its entire length. The shaft (18) and the drum (9) are caused to rotate in like direction and at different speeds about their respective axes, the greater speed being that of the shaft. The process performed by the said machine enables a thorough wash and subsequent dry of large expanses of sheet plastic material prior to any shredding operation being carried out thereon for use in recycling.

Fig.2

EP 0 129 518 A1

0129518

Machine and process for washing and drying sheet
plastic material, intended for use in the recycling
of plastics.

The invention described herein relates to a machine,
and to a relative process, for washing and drying
sheet plastic material. The invention is intended for
use in recycling such plastics, and in particular, in
the re-use of thin sheet plastic which has been thrown
away as waste, and more often than not carries a considerable amount of dirt following its former use.

Such is the case with large plastic bags emptied of
refuse. Another typical example is that of continuous
transparent sheeting used in agriculture for seasonal
erection of hothouse enclosures, which accounts for a
marked quantity of the re-usable plastic aforesaid.

A problem of some importance which needs to be solved
so as to enable recycling of used and —in most cases—
dirty plastic sheet material, is that of satisfactory
cleaning.

The prior art in this field solves the problem of cleaning by first shredding the sheet in its soiled state
so as to reduce it to small pieces measuring some few
centimetres in length and breadth, before proceeding
with the wash-and-dry stage. The plastic is thus washed
already shredded, then dried, and finally undergoes a
densification process of which the end-product is a
granular medium. In this state, the plastic is ready
for re-cycle at manufacturing level.

Machines and plant which function according to the above process are beset with numerous drawbacks.
First and foremost, shredding sheet plastic is an
operation requiring high-power machinery; thus one
has considerable energy consumption, and the blades
or cutting-edges generally in such machines are inclined to wear out quickly as a result, more than any
other single factor, of the abrasive action of soil,
grit &c. clinging to the plastic sheet.

A further drawback results from the fact that washing
of the shredded plastic material is never completely
effective. This means that the dried and granulated
product can only ever be re-used for manufacturing
plastics with a lower quality index.

The main object of the invention described herein is
that of solving the aforementioned problem, efficiently
and economically, and in such a way as to avoid those
drawbacks connected with the type of process offered
by the prior art.

One advantage of the invention described herein is
that of simple construction.

Another advantage of the invention is that of its envisaging a single machine for a dual process —viz, the
washing and subsequent drying of the sheet plastic,
which brings a saving in capital outlay and installation costs, as well as permitting a reduced power requirement with respect to prior art machinery.

Further advantages of the invention lie in its claimed
washing and drying methods, which are notably efficient
in comparison with those of the prior art.

These and other advantages besides are obtained with
the machine and process to which the invention relates,
wherein the machine for washing and drying sheet plastic material, intended for use in the recycling of plastics, is characterised in that it comprises:

-a hollow drum able to rotate about its own axis and provided with a perforated cylindrical surface;

-a shaft located inside of said drum, disposed with its axis parallel to the axis thereof, and provided with a number of paddles and projecting beaters set at regular intervals along its length; said shaft being able to rotate about its own axis;

and in that said drum and said shaft are caused to rotate in like direction and at different speeds, of which the speed of the shaft is the greater, about their respective axes.

The invention will now be described in detail with the aid of accompanying drawings, in which:

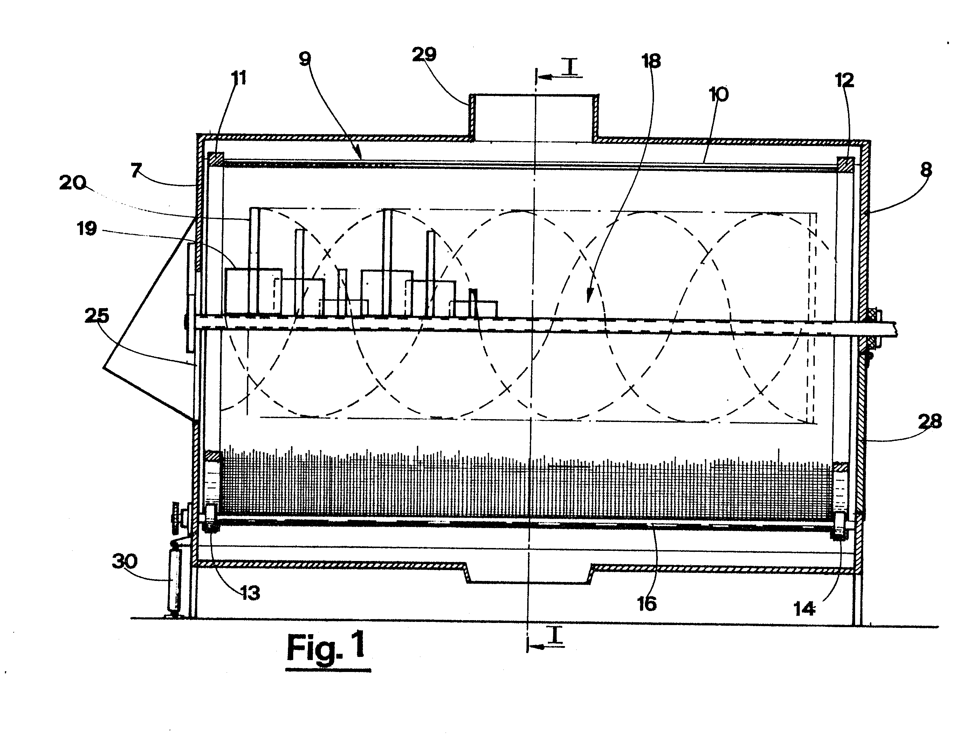

fig 1 is a longitudinal section through the machine corresponding to II-II in fig 2;

fig 2 is a section through I-I in fig 1;

fig 3 shows a detail of the machine in perspective.

With reference to the drawings, 1 denotes a metal casing enclosing a chamber 2. The chamber has two vertical side walls 3, these disposed symmetrically with respect to the central longitudinal plane partly occupied by II-II. Two pitched walls 4 at the top of the casing 1 are likewise disposed symmetrically with respect to the central longitudinal plane aforesaid. The bottom of the casing 1 incorporates two sloping floor sections 5 converging in symmetrical fashion so as to create a drain-off for dirty washing water.

The chamber 2 is bounded at front and rear by vertical walls 7 & 8, these being positioned directly above the feet 6 by means of which the machine stands on the floor. Inside the chamber 2 one has a hollow drum 9 with a perforated cylindrical surface 10 fashioned preferably —though not necessarily— from metal meshing attached to a skeleton framework. The drum 9 is able to rotate about its own axis, and is duly provided at either end with a circular outer race 11 and 12 rolling on a respective pair of wheels 13 and 14. The two races 11 and 12 are coaxial, and their respective pairs of wheels 13 and 14 are identical, being disposed with axes parallel to the axis of the drum 9.

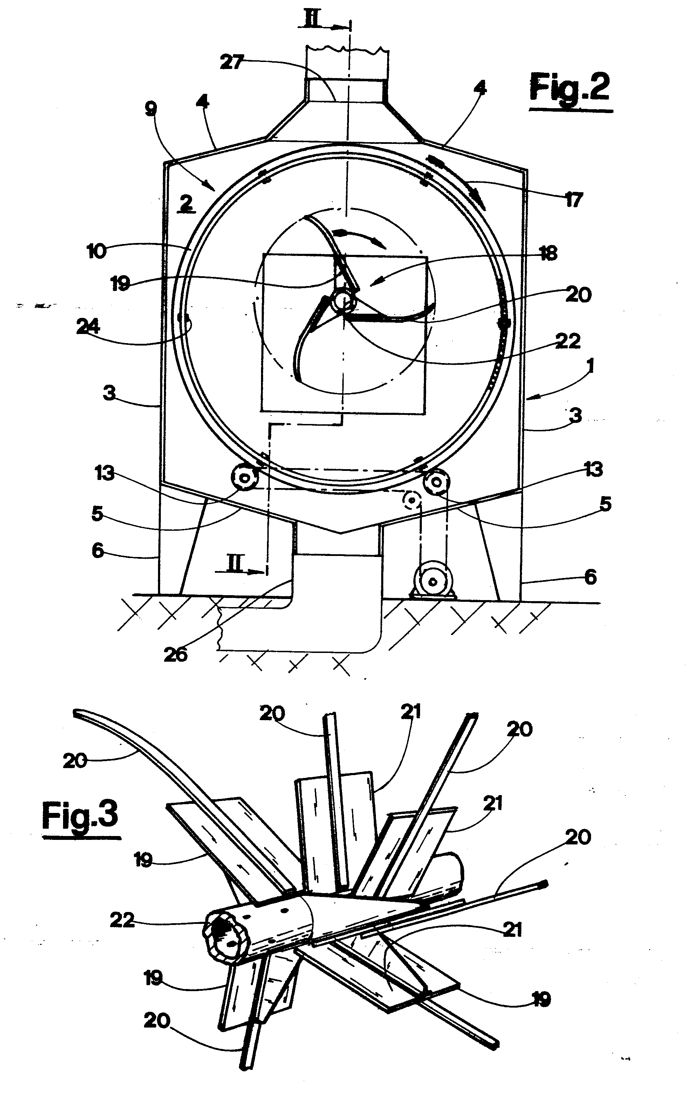

The front pair of wheels 13 located nearest the front wall 7 are turned together by a chain drive 15 and prime mover 36, and transmit rotation thus received to the rear wheels 14 by way of drive shafts 16. The two pairs of wheels 13 and 14 set in motion in this fashion, roll the drum 9 about its own axis by friction, in the direction indicated by the arrow 17 in fig 2.

A shaft 18, located internally of the drum 9, is disposed with its axis parallel to —though not necessarily coaxial with— the axis of the latter. In the embodiment illustrated, the shaft 18 lies at a given distance above the axis of the drum.

The shaft 18 is able to rotate about its own axis independently of the drum 9, and is provided with a number of paddles 19 and projecting beaters 20. The paddles 19 are identical one with the other, exhibiting a flat surface and relative outer edge 21 disposed parallel to the shaft axis, and are fixed to the outermost surface of said shaft 18 at a tangent, to all intents and purposes, whilst being regularly spaced apart along three helicoid generators of identical pitch which are disposed coaxially and spaced at like distance one from the next. The width of each single paddle 19 as measured parallel to the shaft axis is greater —at least, at said outer edge 21— than the distance between one paddle axis and the next -i.e. between the centres of any two consecutive paddles 19 however positioned, measured along a line parallel to the axis of said shaft 18.

The purpose behind the positioning of the paddles 19 in this way —and more precisely, of their outer edges denoted 21— is that of precluding any possibility of the sheet plastic's entanglement around the shaft 18 once caused to rotate.

Each paddle 19 has a projecting beater 20 fixed to it. Said beaters 20 are disposed with their axes lying in planes spaced apart at equal distance one from the next, normal to the shaft axis, and have their outermost ends curved away to the rear with respect to the direction of rotation of the shaft 18 which, it will be remembered, turns in the same direction as the drum 9, —indicated by said arrow 17.

The shaft 18 itself is hollow, creating a coaxial bore 22 through which washing liquid (water) is forced under pressure, the latter being jetted out toward the inner side of the cylindrical surface 10 of the drum 9 by way of a number of radial holes 23 located at regular intervals along the wall of the shaft. Said inner side of the cylindrical surface 10 of the drum is provided with a number of ridges 24 for dragging purposes, these stretching the full axial length of said cylindrical surface 10 and projecting inwards toward the drum axis. Said ridges combine with the naturally rough texture of the inner side of the cylindrical surface 10 in ensuring that the sheet plastic is drawn upwards by the latter during the drum's slow rotation.

The sheet plastic to be treated, which may vary in size from a few centimetres to, say, 150cm in length or breadth, is fed into the drum through an opening 25 located in said front wall 7. The drum 9 and shaft 18 begin to turn about their respective axes, in like direction; the drum being rotated somewhat slowly (8-15 rev/min during the wash stage) by its pairs of wheels 13 and 14 at either end, and the shaft —driven independently— rather fast by comparison —say, 500 to 900 rev/min during the wash stage.

At the same moment, water directed under pressure through the bore 22 in said shaft is jetted out via the latter's radial holes 23 toward the inner side of the cylindrical surface 10 of said drum 9, where the sheet plastic will duly cling and travel upwards by virtue both of the combined dragging action of the ridges 24 and the roughness of the inner side of the cylindrical surface 10, and of the action produced by the paddles 19.

The paddles 19 in fact produce an auxiliary fanning action, thereby keeping the sheet plastic 'plastered' to the cylindrical surface 10 of the drum by centrifugal force.

The material thus dragged around the drum will sooner or later drop in toward the shaft 18, and in so doing come into contact with the beaters 20, which flail, shake up and fling it back against the opposite side of the drum. The overall effect is, literally, to 'beat' the material about with some considerable force, and indeed cause its breaking-up to a certain degree; this, combined with the high pressure jets from said radial holes 23, is such as to produce a particularly effective washing action. Furthermore, the high-speed, whirling motion set up in the plastic enables washing water to penetrate to all parts thereof.

The washing action thus described is so effective as to permit subsequent re-cycling of the sheet material into plastic products having a higher quality index.

Dirty water from the wash drops down onto the sloping floor sections 5 of the machine casing, and flows out naturally through a waste 26.

The wash stage being completed in some 20 or 30 minutes, water flow into the machine is cut off, and the drying stage can begin. At this point, the rotational speed of the drum 9 can be reduced slightly from that used in the wash stage, whilst the speed of the shaft 18 will be stepped up to —say, 800 - 1 000 rev/min. Drying is a two stage operation, the first stage being a spin designed to shake out the material and squeeze water from it by centrifugal force, bringing about a certain degree of nebulisation of the moisture clinging to the plastic, and expelling it from the chamber. This lasts for some 5 or 10 minutes, and is followed by a longer hot-air treatment, of some 15 to 20 minutes duration, during which the hot air enters the machine via said opening 25, whilst damp air and water suspended therein are caused to exit from the chamber 2 by way of a flue 27 located at the top of the latter.

The hot air blown in through the opening 25, together with the fanning action produced by the paddles 19, will dry out the material quickly and thoroughly, and there is, consequently, a certain power requirement, and an attendant consumption of energy.

With drying at an end, and the machine at standstill, the cleaned material can be ejected via a hatch 28 located in the machine casing's rear wall 8, this being provided with a flap 29 which will be opened up at the appropriate moment.

Emptying-out of the washed-and-dried plastic is made simple by turning the drum 9 at slow speed, and tilting the entire machine casing 1 —hence the drum itself— such that the entry-end thereof is raised to a greater height than that of the exit-end. A ram 30 is provided for the purpose.

The machine thus set forth offers a genuine wash-and-dry process for sheet plastic material destined to be recycled, and its overriding feature is that of enabling a thorough wash of large expanses of such recycleable sheet material, followed by drying of same, before any shredding operation takes place. This means that such a shredding operation —brought about subsequently on perfectly clean material— not only permits of a reduced energy consumption, but more important still, can count on considerably prolonged life of the blades or cutting-edges employed.

## Claims

1) Machine for washing and drying sheet plastic material
intended for use in the recycling of plastics,
characterised in that it comprises:
-a hollow drum (9) able to rotate about its own axis and
provided with a perforated cylindrical surface (10);
-a shaft (18) located inside of said drum (9), disposed
with its axis parallel to the axis thereof, and provided
with a number of paddles (19) and projecting beaters (20)
set at regular intervals along its length; said shaft
being able to rotate about its own axis;
and in that said drum (9) and said shaft (18) are caused
to rotate in like direction and at different speeds —of
which the speed of the shaft (18) is greater— about their
respective axes.

2) Machine as in claim 1 characterised in that the individual paddles (19) are identical one with the other, and
exhibit a flat surface and relative outer edge (21) disposed parallel to the axis of said shaft (18); said
paddles being fixed to the outer surface of said shaft
at a tangent, to all intents and purposes, and regularly
spaced apart thus along three helicoid generators of
identical pitch which are disposed coaxially and spaced
apart at like distance one from the next;
and in that the width of each single paddle (19) is greater
—at least, at the outer edge 21 thereof— than the distance
(measured along a line parallel to the shaft axis) between

0129518

the centres of any two consecutive paddles (19) however positioned on said shaft (18).

3) Machine as in claim 1 characterised in that said beaters (20) are identical one with the other and fixed to said paddles (19), disposed thus with their axes lying in planes spaced apart at equal distance one from the next, normal to the axis of said shaft (18), and have their outermost ends curved away to the rear with respect to the direction of rotation of said shaft (18).

4) Machine as in claim 1 characterised in that said shaft (18) is hollow, thus incorporating a coaxial bore (22) through which washing liquid (water) is forced under pressure;
and in that it is provided with a number of radial holes (23) located at regular intervals along the wall of the shaft (18) itself, through which the pressurised liquid is jetted from said bore (22), flung by the shaft toward the inner side of the cylindrical surface (10) of said drum (9).

5) Machine as in claim 1 characterised in that it incorporates ridges (24) for dragging purposes, fixed to the inner side of the cylindrical surface (10) of said drum (9) in longitudinal fashion, and extending the full axial length of the latter.

6) Machine as in claim 1 characterised in that the cylindrical surface (10) of the drum (9) consists of a metallic meshing attached to and supported by a skeleton framework.

7) Machine as in claim 1 characterised in that the drum (9) is provided —at least, at each of its two ends— with an outer race (11) and (12), the latter disposed coaxially
and resting on respective pairs of wheels (13) and (14)
which impart a rolling motion to said drum (9) by friction.

8) Wash-and-dry process for sheet plastic material intended
for use in the recycling of plastics, performed by the
machine described in claim 1 and its dependent claims,
characterised in that it enables a thorough wash and
subsequent dry of large expanses of sheet plastic material
prior to any shredding operation being carried out thereon.

**Fig. 1**

0129518

1/2

0129518

2/2

**Fig.2**

II

27
9
4
4
2
17
10
19
18
24
20
22
3
1
3
13
13
5
5
6
6
II
26

**Fig.3**

20
20
20
21
20
19
21
22
19
21
19
19
20

# EUROPEAN SEARCH REPORT

European Patent Office

## DOCUMENTS CONSIDERED TO BE RELEVANT

EP 84830159.4

| Category | Citation of document with indication, where appropriate, of relevant passages | Relevant to claim | CLASSIFICATION OF THE APPLICATION (Int. Cl. ³) |
|---|---|---|---|
| A | US - A - 1 170 103 (REGNIER)<br>* Page 1, lines 8-14, 73-75, 104-105; fig. 1,2 * | 1,2,5 | B 08 B 3/06 |
| A | DE - C - 163 807 (SCHUMANN)<br>* Totality * | 1,5 | |
| A | US - A - 4 196 019 (KOHLER)<br>* Column 1, line 6-8; column 3, lines 7,8; fig. 1,2 * | 1,2 | |
| A | GB - A - 22 467/1904 (FRANCIS)<br>* Page 1, line 27; page 3, lines 5-10,34,35; fig. 1,2 * | 1,2,5 | |
| P,A | EP - A1 - 0 090 372 (ALU PLAST GMBH)<br>* Claim 11; fig. * | 1,2,4 | TECHNICAL FIELDS SEARCHED (Int. Cl. ³)<br><br>B 08 B 3/00<br>B 08 B 7/00 |
| P,A | US - A - 4 399 828 (KONTOS)<br>* Column 5, lines 41-48; fig. 1,6 * | 6,7,8 | B 08 B 11/00<br>D 06 F 21/00 |

The present search report has been drawn up for all claims

| Place of search | Date of completion of the search | Examiner |
|---|---|---|
| VIENNA | 31-08-1984 | TROJAN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503. 03.82